# EUROPEAN PATENT APPLICATION

(11) **EP 4 286 291 A1**
(43) Date of publication of application: **06.12.2023**
(21) Application number: 22746073.0
(22) Date of filing: 31.01.2022
(51) Int. Cl.: B65D 19/26

(54) **CONTAINER-LOADING PALLET AND TRANSPORTATION SYSTEM/METHOD USING SAME**

(30) Priority: 29.01.2021 JP 2021013999
(71) Applicant: Ooparts Co., Ltd., Noda-shi, Chiba 270-0229 (JP); YPC Co., Ltd., Osaka-shi Osaka 538-0052 (JP); Tri-Wall Japan Co., Ltd., Tokyo 108-0075 (JP)
(72) Inventor: KOMURA Masato, Noda-shi Chiba 270-0229 (JP); TOMOKUNI Makoto, Noda-shi Chiba 270-0229 (JP)
(74) Representative: Wittmer, Maximilian
(86) International application number: PCT/JP2022/003683
(87) International publication number: WO 2022/163854

(57) **Abstract**

An environmental burden can be reduced by reducing wastes during tile packaging, transportation, and preparation at the site where tiles are laid. Provided are an environment-friendly pallet, tile transportation system, and tile transportation method with which the amounts of packing material, etc. can be reduced during tile packing, container shipping, transportation, and preparation at the site where tiles are laid and the entire process of tile packing, container shipping, transportation, and preparation of same at the site can be collectively carried out. Although there is a high risk of breakage of ceramic tiles and other such fragile members, especially when the members are thin, if a cushioning material of the like is omitted without adequate care because vibrations of the members cannot be avoided especially during transportation, the pallet or the pallet system according to the present invention solves such a problem.

## Description

### Technical Field

The present invention relates to a pallet on which ceramic tiles are loaded, which can can be loaded in a container, and to a transportation system/method using the pallet, and it relates, in particular, to a pallet and a system/method using the pallet, which cause environmental burdens to be reduced.

### Background Art

In recent years, thin ceramic tiles such as natural or artificial stone slabs, have been used extensively for floor applications. In most cases, ceramic tiles are stacked near a raw material production area or at a ceramic tile manufacturing site, transported by sea and/or truck, and unloaded at a depot or the like. Then, a required amount of them are transported to a tile installation site. A ceramic tile is made of a brittle material and it is necessary to pay sufficient care in packaging, unpackaging, and transportation. Although it is ideal to carefully package and transport each ceramic tile one by one in an impact-resistant condition, this may cause productivity to be extremely lowered and would not make sense from an industry point of view.

Similarly, brittle glass sheets are packaged in a vertical manner and loaded on a pallet with cushioning materials and the like arranged appropriately (For example, Patent Reference 1). Or they are placed flat and stacked in layer, and cushioning materials and the like are arranged as appropriate such that they are loaded on a pallet (for example, Patent Reference 2). Then, after they are transported to a location where they are needed, they are unpackaged and the thus-transported glass sheets, etc. are used. For example, in the case where the packed tiles are transported by sea, they are transported to a port near a site where the tiles are used utilizing a container, which may be called as a dry container, and they are unpackaged such that cushioning materials, etc. are removed and disposed of.

In these days when reduction of environmental burdens is strongly demanded, it is desirable to avoid or reduce extremely such disposal. On the other hand, the tile is made of brittle material such that there is a risk that it may be broken by vibration or else during transportation or conveyance. Therefore, it is extremely difficult to eliminate cushioning materials, etc.

### Prior Art References

### Patent References

[Patent Reference 1] Japanese application publication No. 2008-143539
[Patent Reference 2] Japanese application publication No. 2010-143599

### Summary of the Invention

### Problem to be Solved By the Invention

In view of the above-mentioned situation, it is desired to bundle or pack a plurality of tiles in respective processes of packaging, conveying, and laying them on respective sites in appropriate manners, respectively. However, it is not so desirable in view of environment to change manners because a lot of time and effort are required in packaging and unpackaging and moreover a lot of wastes such as packages and cushioning materials, etc. are produced. On the other hand, if cushioning materials, etc., are omitted without considering caused effects, there would be a risk that a brittle material such as a ceramic tile, especially a thin plate-shaped material, may be broken. In particular, vibration and so on during transportation cannot be avoided such that it is likely that a ceramic tile packaged in non-appropriate manner may result in breakage thereof and the like. Therefore, it is likely that a dilemma may be caused between optimizing package manner and improving productivity.

### Means to Solve the Problem

In view of the above-mentioned issues, the present invention can provide a pallet that can be used throughout for packing and transporting tiles and for tile setup preparation at a laying site, and a transportation system using the tile and a transportation method of using the tile. It is desirable that such a pallet can reduce the environmental burdens and it is also desirable that the transportation system using the tile and the transportation method of using the tile are so configured that the environmental burdens are considered.

Specifically, the following may be provided.
(1) A pallet comprising: a flat plate part comprising recyclable material; a leg part being capable of making a space under the flat plate part and comprising a support face being capable of supporting load; wherein the flat plate part comprise an upper surface on which two ceramic tiles can be placed flat side by side and supports the two ceramic tiles; wherein the leg part is disposed at each of at least four (4) portions in a periphery of the flat plate part such that an insertion member to be inserted is not prevented from being inserted into the space such that the pallet or the pallet with a load is lifted or lowered; and wherein weight of the ceramic tiles which are placed on the upper surface of the flat plate part that is supported on the support face of the leg part is supported by the support face via the flat plate part in at least part of the flat palate part and the support face is sticked to at least part of the flat plate part such that weight of the leg part can be supported when the pallet or the pallet with the load is lifted as the insertion member supports the pallet or the pallet with the load.

Here, the recyclable material may include, for example, paper such as corrugated cardboard. The paper may be defined as "What is manufactured by agglutinating plant or other fibers. In a broad sense, it includes synthetic paper that is manufactured using synthetic polymers as a raw material, as well as paper blended with fibrous inorganic materials." For example, it may include "what is made by dispersing fibers in water, separating residue in a thin and flat form by a strainer, and by dehydrating and drying the residue." Here, the term of recycling may refer to regeneration or reclamation of what is to become unwanted or is obtained collaterally as a resource. For example, it may include making recycled or regenerated paper from raw materials containing paper wastes. And the term of reuse may refer to repeated use or using it repeatedly.

For example, if a single 600 mm x 600 mm x 10 mm ceramic tile is to be laid flat, a flat plate part having a front face of 600 mm x 600 mm or larger may be used, and leg parts may be placed at the four corners. A flat plate part having a front face that can include a surface of 1210 mm x 600 mm x 10 mm is preferred when two ceramic tiles of the same shape are laid flat side by side. The reason why 1210 mm is referred to is because a 10 mm gap (a buffer material may be inserted therein) is spaced between the two ceramic tiles. And the leg parts can support loads at the four corners of each ceramic tile. Then, it should be understood that the above-mentioned load can be supported if at least six (6) leg parts are provided assuming shared leg parts are provided at two adjacent corners of the two ceramic tiles. Each ceramic tile may have enough strength to support its own weight, although it may deflect downward, if the four corners thereof are supported. In the case where the flat plate part is made of recyclable material such as corrugated cardboard, it can flexibly receive ceramic tiles placed thereon and assist in supporting the weight of the ceramic tiles. Sticking may include bonding, pressure bonding, gluing, mechanical joining, adsorbing, and so on. The strength of the sticking may be so enough that the own weight of the leg can be held. For example, the insertion member can be inserted into the above-described space and contact/abut the lower surface of the flat plate part, and the insertion member can be moved upward such that the flat plate part may be lifted and higher than the space such that the leg part may depart from the placing surface and be kept sticking to at least a portion of the flat plate part. The flat plate part may also be strong enough to hold such a leg part in a state being away from the placing surface, e.g., in a hanging state. After the above-mentioned insertion member moves in a lateral direction (e.g., a horizontal direction) to a desired position, it descends such that the pallet can be placed on a new placing surface at the desired position. In this process, the above-mentioned leg part can secure the predetermined space again from the placing surface so that the insertion member can be move out from the underside of the flat plate part. In this way, the pallet can be re-placed, re-loaded, or otherwise re-positioned. The flat plate part and the leg part may be strong enough to withstand such reposition, including a sticking state. At this time, the pallet may be loaded with tiles or other loads including ceramic tiles. In a condition where ceramic tiles, etc. are loaded thereon, the major weight may be supported by the leg parts, and weight caused by deflection or the like of the ceramic tiles, etc. at locations other than the periphery of the flat plate part to which the leg parts can be attached may be supported by the flat plate part. In this case, the flat plate part is supported by a plurality of leg parts attached to the periphery such that the upper surface of the flat plate part can receive the weight caused by deflection, etc.
(2) A leg part that is at least one of leg parts of any one of pallets as recited above, wherein a support face that is sticked to at least part of the flat plate part of the pallet is detachable therefrom and the leg part is separable from the flat plate part by being detached; wherein each of leg parts in a separate state has a same structure; wherein, in at least two leg parts, respective concave and convex portions of external shapes thereof engage with each other such that an aggregated body comprising the at least two leg parts is configured as volumetric efficiency is increased by the engagement. The above-mentioned being detached may include peeling off adhesive including a hot-melt adhesive, and a partial damage or breakage of adhered surfaces of the flat plate part. In the case of mechanical adhesion such as fitting or screwing, it may include mechanical separation. Here, it is preferable that the flat plate part is comprised of recyclable material. For example, it may include those which can be recycled such as corrugated cardboard. In a broader sense, it may also include those which are relatively easy to dispose of. It may be made of paper. It is preferable that the leg part is reusable. It is preferable that it can be reused. For example, it is preferable that it is comprised of durable material. For example, it may be made of resin such as polypropylene. The resin may be either natural or synthetic. It may also be made of wood, metal, or inorganic compounds. Furthermore, it may be made of a composite material including any of the above-mentioned.
(3) A pallet with a load as recited in any one of the above-mentioned pallets, wherein a plurality of ceramic tiles are placed on an upper surface of a flat plate part of the pallet as respective front faces of the ceramic tiles are oriented upward such that the ceramic tiles are stacked in layer and wherein a binding band is wrapped around the ceramic tiles being placed and stacked in layer together with the flat palate part.
   The binding band may include a lashing belt. If a plurality of ceramic tiles are wrapped around with the binding band, stiffness of the pallet with loads as a whole can be increased such that it can be endurable against vibration during the transportation. While the ceramic tile has a front surface that faces the interior and a back surface serving as an adhesive surface, no scratches or the like cannot exist on the front surface, but the back surface would not be questioned whether scratches and so on exist or not. Therefore, when ceramic tiles are transported, one pair of ceramic tiles would be composed with the respective front surfaces facing each other and the one pair as a unit has been handled for transportation and other purposes. However, hardness of the front surface has also become sufficiently high and the inclusion of sharp convex portions on the back surface and impurities having sharp convex portions can be sufficiently reduced. Therefore, it was found that it is not necessarily required to make surface-to-surface facing pair. On the other hand, it is preferable to perform pretreatment for adhesion only on the back surface at the site of tile laying or the like.
(4) A container in which a plurality of pallets with loads, each of which is any one of those mentioned above, are loaded.

It is preferable that a pallet with a load is loaded in a container in a close packed manner while a work space is secured. In container transportation, generally speaking, the volume of the used container often limits the amount of loading. (5) A tile stacked body at a tile-laying site where tiles are to be laid wherein a pallet with a load as mentioned above is placed at the tile-laying site and in a state that a binding band is removed.

Conventionally, a couple of tiles are stacked and brought in as one pair with their front surfaces facing each other such that it is necessary to reload the tiles such that back surfaces thereof are faced up. Here, the stacked body is formed with the back surfaces facing up such that it is not necessary to reload them.
(6) A tile transportation system comprising: a pallet as any one of those mentioned above; at least one or more ceramic tiles stacked in layer; and a binding band.
(7) A tile transportation system according to any one of those mentioned above, wherein the tile transportation system is used from a manufacturing place or an accumulation place of ceramic tiles, through freight or transportation of the ceramic tiles, to a final construction site.
(8) A tile transportation system according to any one of those mentioned above, wherein it is not necessary to unpackage at least one or more stacked ceramic tiles from a manufacturing place or an accumulation place of ceramic tiles, through freight or transportation of the ceramic tiles, to a final construction site such as a ceramic tile laying site. Since unpacking is not required, it is not necessary to dispose of or newly add cushioning, protective, or packaging materials generated as a result of unpacking.
(9) A recyclable pallet comprising: a flat plate part comprising a recyclable material; at least one leg part as defined in above (2); and a leg part having a same structure as the leg part; wherein the flat plate part comprises an upper surface on which two ceramic tiles to be supported can be placed flat side by side; wherein the leg part is disposed at each of at least four (4) portions in a periphery of the flat plate part such that an insertion member to be inserted is not prevented from being inserted into the space such that the pallet or the pallet with a load is lifted or lowered; wherein weight of the ceramic tiles which are placed on the upper surface of the flat plate part that is supported on a support face of the leg part is supported by the support face via the flat plate part in at least part of the flat palate part and the support face is sticked to at least part of the flat plate part such that weight of the leg part can be supported when the pallet or the pallet with the load is lifted as the insertion member supports the pallet or the pallet with the load.

Here, the recyclable pallet may include a flat plate part that is not re-used one or reusable one (non-reused flat plate part) and at least one of reused leg parts. It is preferable that the leg part would be of the same shape or substantially the same shape. Even if it is not of the same shape, it may be able to constitute an aggregated body such that the volumetric efficiency, as described below, can be improved. In this way, at least one reused leg part may be included, but a leg part that is not a reusable one (non-reused leg part). The thus-configured pallet can be said to be a recycled one because a non-reused flat plate part is included.
(10) A tile transportation system comprising: a recyclable pallet as any one of those mentioned above; at least one or more ceramic tiles to be stacked in layer; a binding band. (11) A method of shipping ceramic tiles comprising the steps of: placing a pallet as any one of those mentioned above or a recyclable pallet as as any one of those mentioned above; stacking the ceramic tiles onto the pallet or the recyclable pallet; and binding the pallet or the recyclable pallet and stacked ceramic tiles with a binding band.

If the ceramic tiles are packaged in this manner at a manufacturing site, they can be used as they are at the construction site for the final process such as laying. (12) A conveyance method comprising the steps of: placing a pallet as any one of those mentioned above or a recyclable pallet as any one of those mentioned above; stacking the ceramic tiles onto the pallet or the recyclable pallet; binding the pallet or the recyclable pallet and stacked ceramic tiles with a binding band so as to configure a pallet with a load; and loading at least one or more pallets with loads or recyclable pallets with loads into a container. (13) A conveyance method according to any one of those mentioned above comprising: taking out from the container the at least one or more pallets with loads or recyclable pallets with loads having been loaded; conveying the at least one or more pallets with loads or recyclable pallets with loads to a tile-laying site. (14) The conveyance method according to any one of those mentioned above comprising: taking out loads from the pallets with the loads or recyclable pallets with the loads; removing leg parts from the pallets or recyclable pallets; and attaching the removed leg parts to a flat plate part comprising a recyclable material so as to assemble a recyclable pallet.

Described above;
(15) A system which manages recyclable pallets including a pallet as any one of those mentioned above from a manufacturing place of ceramic tiles to a laying site where the ceramic tiles are laid, comprising: a computer; a transmission part that transmits information from and to the computer; a communication terminal accompanied by the recyclable pallets that communicates with the computer; wherein the recyclable pallets are assembled from recycled flat plate parts and reused leg parts at a manufacturing site where the ceramic tiles are manufactured; wherein the recyclable pallets are disassembled to recyclable flat plate parts and reusable leg parts at the tile-laying site; wherein the recyclable pallets are used at least one stage from shipping the ceramic tiles; conveying the ceramic tiles; leaving a port with the ceramic tiles; transporting the ceramic tiles; arriving in a port with the ceramic tiles; delivering the ceramic tiles; and preparing laying the ceramic tiles.

Here, the corrugated cardboard generally refers to a paperboard product in a board form that is made strong with a multilayer structure and processed to be useable as packaging and packing materials. The corrugated cardboard is also a name of structure body formed by gluing flat papers (liners) and a wavy fluted paper (medium) therebetween. Depending on the number of liners and the number of media, it is classified as a single faced corrugated cardboard, a double faced corrugated cardboard, and a double-wall corrugated cardboard. In a narrow sense, the corrugated cardboard refers to this corrugated cardboard sheet, which also referred to the original corrugated cardboard. It is a raw material used in a variety of corrugated cardboard products and a sheet-like (plate-like) material in which a fluted (corrugated) core is attached to a liner and another liner is attached to the other side of the core for reinforcement. (The above is from Wikipedia.) Two or more corrugated cardboard sheets can also be stacked on the top of one after another. An appropriate thicknesses thereof may be provided to achieve the required strength.

The structure of the material is not necessarily limited to the above-mentioned as long as it is recyclable. For example, the material may include those which have a honeycomb structure (honeycomb corrugated cardboard, honeycomb board, paper honeycomb, etc.). It may also contain resin as well as paper. If it is recyclable, it may be a flat plate part made of resin. For example, it may be a plate-like member having a honeycomb structure made of recyclable plastic (which may include TECCELL board).

The flat plate part may be generally shaped rectangular in the top view, which has the top and bottom surfaces as the main surfaces. The size can be modified as appropriate in order to fit the tiles. For example, if one tile of 600 mm x 600 mm is to be stacked flat, the top surface of the flat plate part should be at least 600 mm x 600 mm. It is also possible to have a margin of 1-5 mm on one side as clearance. On the other hand, if it is too large, it is not only to have a wasteful margin as the material, but also to cause disadvantage in binding and transporting it, which will be described later. It is preferable to have 680 mm or less x 680 mm or less. It is preferable to have 650 mm or less x 650 mm or less. It is preferable to have 620 mm or less x 620 mm or less. When two sheets are laid flat side by side, the upper surface of the flat plate part should be 600 mm or more x 1200 mm or more. It is also possible to have a margin of 1-5 mm on one side as clearance. On the other hand, if it is too large, it is not only to have a wasteful margin as the material, but also to have disadvantage in binding and transporting it, which will be described later. It is preferable to have 680 mm or less x 1280 mm or less. It is preferable to have 650 mm or less x 1250 mm or less. It is preferable to have 620 mm or less x 1220 mm or less.

For example, if one 800 mm x 800 mm tile is to be stacked flat, the upper surface of the flat plate part should be 800 mm or more x 800 mm or more. It is also possible to have a margin of 1-5 mm on one side as clearance. On the other hand, if it is too large, it is not only to have a wasteful margin as the material, but also to have disadvantage in binding and transporting it, which will be described later. It is preferable to have 880 mm or less x 880 mm or less. It is preferable to have 850 mm or less x 850 mm or less. It is preferable to have 820 mm or less x 820 mm or less. When two sheets are laid flat side by side, the upper surface of the flat plate part should be 800 mm or more x 1600 mm or more. It is also possible to have a margin of 1-5 mm on one side as clearance. On the other hand, if it is too large, it is not only to have a wasteful margin as the material, but also to have disadvantage in binding and transporting it, which will be described later. It is preferable to have 880 mm or less x 1680 mm or less. It is preferable to have 850 mm or less x 1650 mm or less. It is preferable to have 820 mm or less x 1620 mm or less.

The space described above may be secured such that the insertion member, for example a fork of a forklift, may be allowed to be inserted. For example, the space described above may be about 100 mm or higher from the floor (or the bottom surface of the leg part). It may be 120 mm or more. It may be 150 mm or more. If it is too low, the insertion member cannot be inserted, and if it is too high, the height of the pallet alone or a loaded pallet may become too high. It may not be suitable for being put into a container when the container has an internal height limit. The leg part may have a support face which receives load from the flat plate part and a spacer part having a function to hold the space. The spacer part can support the load of the tiles and others stacked in layer and hold the space. The support face can also contact at least part of the lower surface of the flat plate part and receive the above-mentioned load. The leg part may be formed integrally, including the spacer part, the support surface, and so on. It may also be bonded with adhesive or the like at a contact surface between the support face and the lower surface. The strength of the adhesion may be so much as the own weight of the leg part can be held. For example, any commercially available adhesive (which may include various kinds of adhesives such as inorganic adhesive, organic adhesive, water-dispersion adhesive, solution adhesive, solventless adhesive, solid type adhesive, etc.) may be used. The strength of the adhesion may be so much sufficient as the own weight of the leg part can be held when the pallet is lifted from the bottom surface of the flat plate part by the fork or the like. In the case where the flat plate part is made of recyclable material such as corrugated cardboard, it is preferable that the strength of the adhesive is so strong that the leg part can be easily removed therefrom after use. For example, it may be a hot melt, which melts at a high temperature such that the strength of the adhesion is almost lost. In addition to adhesion, mechanical bonding may also be used. For example, the bonding may be made by a clamp, or it may be attachable and detachable means such as a hook and loop fastener. The material to be used to form the shape may be, for example, synthetic resin such as plastics, fiber-reinforced synthetic resin, etc. It is preferable that it is made of recyclable or reusable material. The leg part can be removed from the flat plate part so as to be made to be re-used (or reusable). The leg part may be arranged around the periphery of the flat plate part in a good balanced manner. It is preferable that at least four (4) legs are arranged to support the plane. For example, they can be arranged near each of the four (4) corners of a rectangular flat plate part. In the case of pallet on which two tiles are laid flat side by side, it may be provided with one leg part at around each midpoint along each side in the longitudinal direction. It is preferable that the leg parts have the same shape. For example, they may be classified into two different kinds of shapes. Fewer kinds of shapes may facilitate manufacturing them. It is preferable that they are arranged in such a manner that the insertion member such as the above-mentioned fork may be allowed to be inserted. It is preferable that the space between the leg parts is at least 250 mm, at least 300 mm, at least 500 mm, or at least 600 mm. If the space is too wide, it is not only difficult to handle the pallet, but it may also be difficult to lift up the pallet in a good balanced manner since the space may be longer than the width of the bottom surface of the flat plate part with respect to the pallet or the pallet with the load.

The tile stacked body as described above may be those stacked in layer according to tile size. Two or more tiles may be stacked in layer and for example 50 or more tiles may be stacked in layer. And it is not desirable if too many tiles are stacked in layer as it may cause the pallet with the load to be too heavy or too large (too high). For example, it is preferable that the total number of tiles is 100 or less in the case of the pallet on which two tiles are stacked in parallel side by side to form a layer. It is also preferable that tiles are stacked in layer as their respective front faces are faced down. Something like a primer or a mixed mortar with a back-coating polymer in order to improve compatibility and adhesion with a mortar on the laying surface may be applied to the back face of the tile before actually laying the tile. It would be easier if the back face is faced up. The stacked body may be secured with a binding band. For example, a lashing belt or a lashing tape or a wide industrial cellophaned tape can be used as a binding band. The binding band or the like may be used to bind not only the tile stacked body but also the flat plate part at the same time. They may be handled as a single body in transportation, etc.

One or more pallets with loads as mentioned above may be loaded into a container. In most cases, a 20 ft container and a 40 ft container are used as the above-mentioned container. The container size is standardized by ISO, and a rectangular space may be used as a loading volume or capacity. For example, the inside dimensions of a 20 ft container are 5.8 m long, 2.3 m wide, and 2.5 m high, while the inside dimensions of a 40 ft container are 12 m long, 2.3 m wide, and 2.3 m high. The outer dimensions of a pallet with a load, for example, on which two 600 mm x 600 mm tiles are laid flat side by side to form one layer, have dimensions of at least 600 mm x at least 1200 mm. Three pallets with loads can be placed in parallel such that three rectangular shapes of the respective pallets are arranged as their respective short edge directions are aligned so as to be at least 600 mm x 3 = at least 1800 mm long in the top view with respect to the width direction of the container. In addition, only four pallets can be placed in the longitudinal direction (1200 mm or more x 4 = 4800 mm or more). That is to say, a 3 x 4 array can be made.

The pallets with loads having been loaded in the container can be taken out at the port and loaded individually onto a truck or the like as they are. The pallets with loads can then be transported to respective tile laying sites by each pallet as a unit. At this time, since the pallets with loads are put together in one piece with binding bands, it is not necessary to re-stack the tiles. In addition, the pallet with load only has to be secured to a bed or the like of a truck or the like as a loaded pallet. The pallet with load transported to the laying site may be placed at the tile laying place where tiles are actually laid by a forklift truck or the like. With respect to the placed pallet with load, a binding band can be untied (or may be cut out) such that it can be utilized as a tile stacked body in a preparation stage for laying tiles. For example, something like a primer or a polymer-mixed mortar for backing to improve adhesion can be applied to the facing-up back face of the pallet, and the pallet can be moved to the laying surface (including, moved by hand) and placed to cover the mortar having been applied beforehand on the laying surface with its back face facing down. In this way, the tile stacked body before transportation can be moved as is in a single unit to the tile laying place where tiles are laid, and can be utilized as is as prepared materials just before laying the tile if the binding bands are removed. During this period of time, very little is discarded or disposed of such that the environmental burdens are extremely low.

### Effect Of The Invention

As described above, according to the invention of the present application, the above-described pallet, pallet with load, container in which the pallet with load is loaded, tile staked body at the tile laying site, shipping method of shipping the ceramic tile, conveyance method by the container loading of the pallet with load, and conveyance method of conveying the tile to the tile laying site such that the disposal loss and the environmental burdens are low as well as simplification of the processes can be achieved.

### Brief Description of the Drawings

Fig. 1A is a perspective view of a pallet loaded in a container according to an embodiment of the present invention.
Fig. 1B shows a perspective view of a pallet loaded in a container according to another embodiment of the present invention.
Fig. 2 shows a bottom view illustrating the pallet loaded in the container according to the embodiment of the present invention.
Fig. 3A shows an enlarged view illustrating a relationship between a leg part and a floorboard of the pallet loaded in the container according to the embodiment of the present invention.
Fig. 3B shows a perspective view illustrating the leg part of the pallet loaded in the container according to an embodiment of the present invention.
Fig. 3C shows a perspective view illustrating leg parts of another embodied configuration of the pallet loaded in the container according to the embodiment of the present invention and how an aggregated body is formed so as to improve volumetric efficiency by combining a convex portion of one leg part and a concave portion of another leg part.
Fig. 3D shows a perspective view schematically illustrating an aggregated body consisting of two leg parts among the combinations of the convex and concave portions as shown in Fig. 3C.
Fig. 4 shows a perspective view illustrating a state in which tiles are stacked in layer on the pallet loaded in the container according to the embodiment of the present invention.
Fig. 5A shows a perspective view illustrating a state in which tiles are stacked in layer on the pallet to be loaded in the container and how band members are wrapped around them for fixing according to the embodiment of the present invention.
Fig. 5B shows a perspective view illustrating a state in which tiles are stacked in layer on the pallet to be loaded in the container and how lashing belts are wrapped around them according to another embodiment of the present invention.
Fig. 6 shows a diagram illustrating a cluster arrangement of pallets to be loaded in the container according to an embodiment of the present invention.
Fig. 7 shows a diagram illustrating interior size of a 20 ft container.
Fig. 8 shows a diagram illustrating an exemplary hand lift capable of moving a pallet with stacked tiles in layer to be loaded in the container according to another embodiment of the present invention.
Fig. 9 shows a diagram illustrating an arrangement of pallets with tiles stacked in layer to be loaded in the container, which are secured by lashing belts.
Fig. 10 shows a diagram illustrating a size of a tile to be stacked in layer onto a pallet to be loaded in a container according to an embodiment of the present invention.
Fig. 11 shows a diagram illustrating how tiles are re-stacked in layer onto a pallet for a tile laying site once the tiles were loaded on a pallet in a vertical manner to be loaded in a container.
Fig. 12 shows a schematic diagram illustrating a system for managing recyclable pallets from a ceramic tile manufacturing site to a ceramic tile laying site.

### Embodiment for Carrying Out the Invention

Next, embodiments of the present invention will be explained with reference to the drawings. In respective drawings, respective components and equivalent portions having the same configuration or function are assigned with the same reference numerals and their descriptions are omitted. And in the following description, merely examples of embodied aspects of the present invention are shown and they can be changed as appropriate without departing from the scope of the present invention based on the common technical knowledge of those skilled in the art. Therefore, the scope of the present invention is not limited to these specific examples. In addition, these drawings are represented with emphasis for illustrative purposes and may differ from actual dimensions.

### Embodiment 1

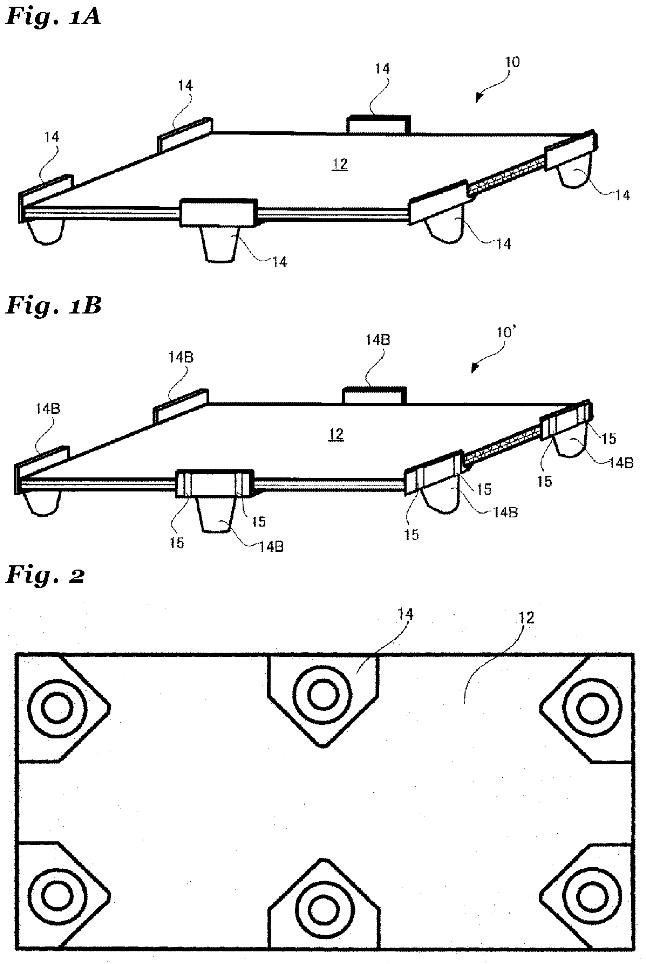

Fig. 1A shows a perspective view illustrating a pallet on which ceramic tiles and the like can be staked in layer of an embodiment of the invention of the present application, and Fig. 2 shows a bottom view. The pallet 10 are provided with a flat plate part 12 made of corrugated cardboard and six (6) leg parts 14 in total arranged around four (4) corners along a periphery of the flat plate part and around middle parts along the periphery in the longitudinal direction. These leg parts 14 have the same shape with each other and are molded integrally so as to be manufactured from a single mold. Fig. 1B shows a diagram illustrating a pallet 10' of another embodiment. Each leg part 14B has two grooves 15 formed for lashing belts to fasten the pallet.

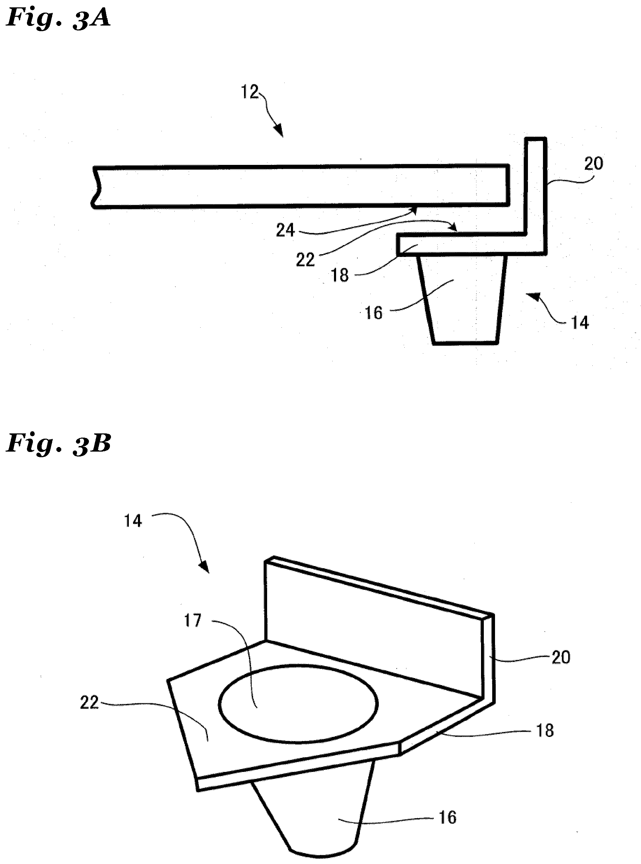

As shown in Fig. 3A, the leg part 14 includes a spacer part 16 having a function to secure a space; a vertical part 20 having a contact surface provided in a vertical manner (surface which contacts a side face along one side of a rectangle in the top view of the flat plate part 12) to define a position from the side so as to be along the peripheral side of the flat plate part 12; and a horizontal part 18 to receive load from the flat plate part 12. The upper surface of the horizontal part 18 serves as a support face 22 and is in contact with a portion 24 near the perimeter of the lower surface of the flat plate part 12 to support the load. This contact surface is supplied with adhesive and has the adhesive strength to support the weight of the leg part 14 even if the leg part 14 is separated from the placing surface. However, the support face 22 may be joined to a portion 24 near the perimeter of the lower surface of the flat plate part 12 with not only adhesive but also physical and/or chemical means. And the joint may be detachable and attachable. Any known joining method such as screwing, riveting, fitting (with latch), etc. may be employed. Here, the vertical part 20 is depicted so much high, but it is not necessarily to be so high.

Fig. 3B shows a perspective view of the leg part 14 and an opening 17 is provided in the support face 22 of the horizontal part 18. This opening 17 forms a through hole penetrating the bottom of the spacer part 16, as can be seen from the bottom view of Fig. 2. As shown in the figures, the spacer part 16 has a tapered shape so as to become thinner downward, and the through-hole also has a tapered shape so as to become thinner downward. Suppose another leg part 14 is positioned over the top of this and the bottom (or tip) of the spacer portion of the other leg part 14 is inserted into the opening 17 such that an aggregated body including a plurality of leg parts 14 can be formed in a state where the volumetric efficiency is improved. Here, the improvement of the volumetric efficiency may mean that more things (in this case, leg parts) can be packed in the same three-dimensional space. For example, consider a virtual smallest a rectangular parallelepiped that can accommodate one leg part 14 inside. Suppose the volume (or capacity) of the rectangular parallelepiped is A cm³. Next, consider a virtual rectangular parallelepiped that can accommodate two leg parts 14 in parallel side by side, it is clear that if it has A x 2 cm³ in the volume, it can accommodate them. If the volumetric efficiency is improved, the two leg parts 14 can be accommodated in a volume (or capacity) smaller than A x 2 cm³ due to the combination of their respective convex and concave portions. If the volume of the smallest rectangular parallelepiped that can accommodate the two leg parts 14, which are engaged at this time, is B cm³, the volumetric efficiency improvement = (2 x A - B) / (2 x A) may be expressed by the percentage. For example, if the case where the leg part 14 is accommodated in a 20 cm x 20 cm x 20 cm cube (which may be included in the rectangular parallelepiped) is considered, there may be A = 8000 cm³. If the tip is inserted into the opening and the height of the aggregated body can be lowered by 5 cm, then B = (20 x 2 - 5) x 20 x 20 = 14000 cm³, and the volumetric efficiency improvement = (2 x 8000 - 14000) / (2 x 8000) = 0.125 = 12.5% is thus calculated. Since B > A, at most, the volumetric efficiency improvement = 50 % can be obtained. It is preferable that the volumetric improvement is 5 % or more, 10 % or more, 15 % or more, or 20 % or more.

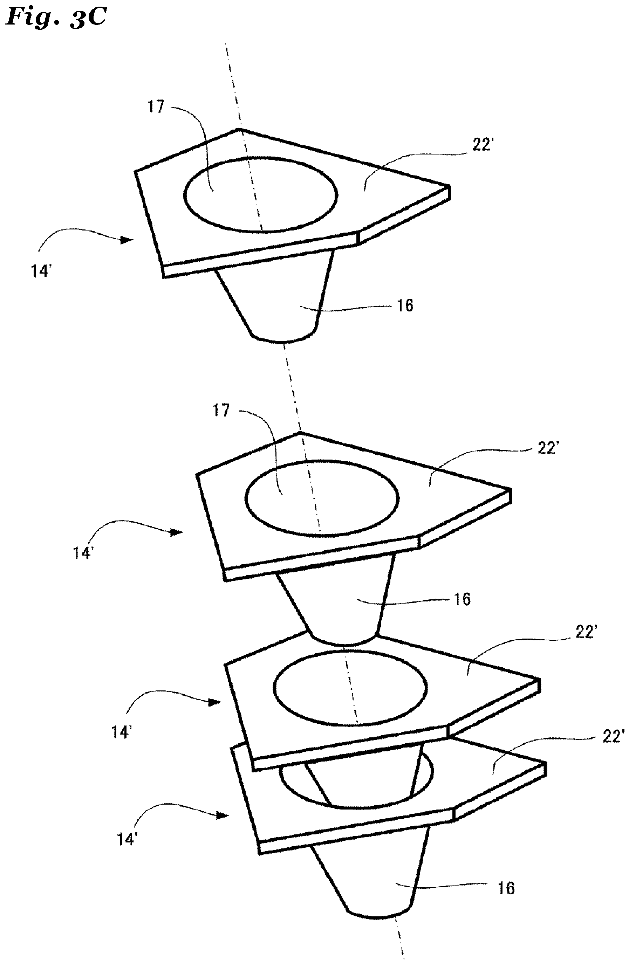

With respect to a plurality of leg parts, the tip of the spacer part 16 (i.e., convex portion) is inserted into the opening 17 (i.e., concave portion) and a lower surface of the horizontal part 18 abuts a top edge of the vertical part 20 so as to stop further insertion movement. It is not necessary for the vertical part 20 to be so much high as illustrated in Fig. 3A, and it can be adjusted in the height so as to abut an edge of the flat plate part 12 and the degree of engagement between the tip of the spacer part 16 and the opening 17 as described above can be adjusted (so sufficient height as to provide clearance therebetween for easy disengagement). This combination of the convex and concave portions allows the two leg parts to be accommodated in a smaller space than that in the case where the two leg parts are simply placed side by side. Here, the combination of the convex and concave portions is not deep to be tightened because the vertical part 20 abuts the lower surface, but in another embodiment of the leg part 14' as shown in Fig. 3C, such a vertical part 20 is absent and the convex and concave portions can be deeply engaged until the support face 22' contacts the lower surface of the horizontal part of the leg part 14'. As shown in Fig. 3C, two or more leg parts 14' are put together such that a compact aggregated body of a plurality of leg parts can be formed. In this way, the leg part 14 is characterized by including the spacer part 16 having a top edge and a bottom edge and the support face 22, 22' and in that the support face and the spacer part are joined such that weight loaded onto the support face is applied to the spacer part and in that the spacer part can hold the predetermined space between the bottom edge and the support face by supporting the load. The spacer part has a tapered outer shape that becomes smaller toward the bottom edge and an opening in a tapered shape toward the bottom edge along the same tapered outer shape such that the tapered outer shape is so configured as to be fittable to the opening in the tapered shape.

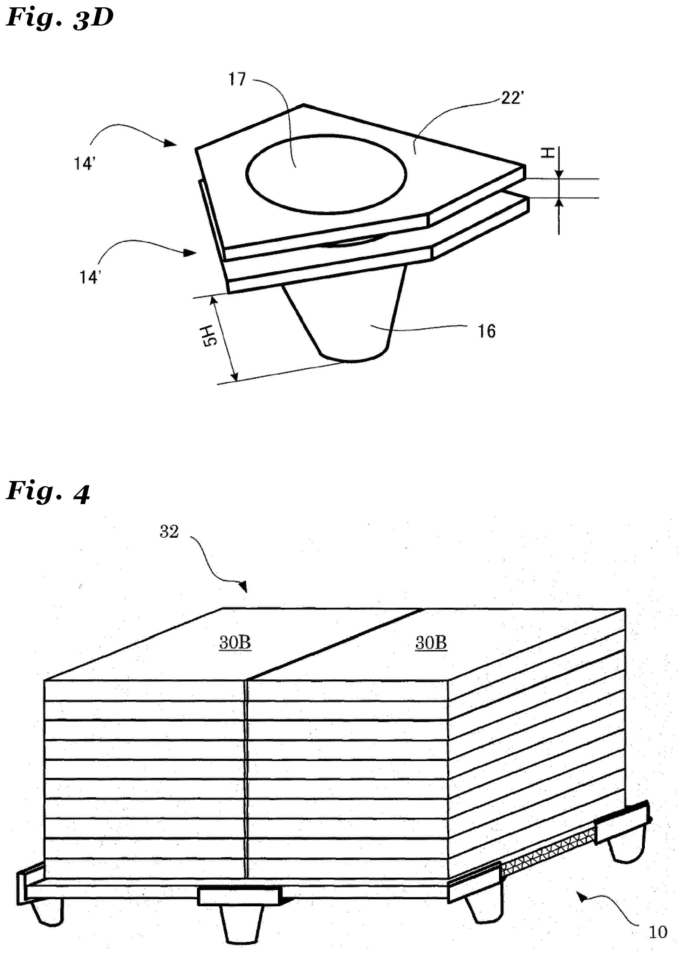

Fig. 3D shows a perspective view illustrating schematically the aggregated body consisting of two leg parts among the combinations of the convex and concave portions as shown in Fig. 3C. The tip of the spacer part 16 of the upper leg part 14' (i.e., convex portion) is inserted into the opening 17 of the lower leg part 14' (i.e., concave portion) to form an aggregated body. If the thickness of the plate forming the support face 22' is ignored, the protruding length of the spacer part 16 of the leg part 14' is 5H, and the distance between the back side of the support face 22' of the upper leg part 14' and the support face 22' of the lower leg part 14' is H when the aggregated body is made. Suppose that the area of the upper surface of the rectangular parallelepiped that accommodates these leg parts 14' and the aggregated body is 5H x 5H, then the volumetric efficiency improvement = (2 x 5H x 5H x 5H - 5H x 5H x 6H) / (2 x 5H x 5H x 5H) = 0.4 = 40 % may be given.

In general, the corrugated cardboard that configures the flat plate part 12 does not have so high strength and tends to bend relatively with ease when a bending load is applied. With respect to this pallet, ceramic tiles (having relatively high rigidity) are placed over the upper surface of the flat plate part such that the weight of the ceramic tiles is received by the support faces 22 of the leg parts 14 via the flat plate part 12. Therefore, it can be said that the weight of the ceramic tiles and the stacked ceramic tiles is substantially supported by the leg parts 14. With respect to the present pallet, when the leg parts 14 are removed from the flat plate part 12, the pallet is separated into a flat plate part 12 made of corrugated cardboard that can be incinerated or otherwise disposed of and the reusable leg parts. In this way, after all the ceramic tiles are repositioned elsewhere, the pallet can be disassembled and the leg parts 14 only can be sent back to the origin of transport for reuse and a recyclable pallet can be formed by bonding them to the flat plate part 12 mad of corrugated cardboard there. In this way, the amount of waste can be minimized.

As can be seen from Figs. 1A, 1B, and 2, it is rectangular in the top view and the long side approximately twice as long as the short side. For example, if 600 x 600 tiles are to be placed thereon, the length is 1200 mm or longer such that two tiles can be placed flat side by side in the longitudinal direction. The corrugated cardboard configured for the flat plate part 12 is a so-called corrugated cardboard sheet, in which grooves configured by flutes extend in the longitudinal direction. In general, the corrugated cardboard is classified into a single faced corrugated cardboard, a double faced corrugated cardboard, a double-wall corrugated cardboard, and a triple-wall corrugated cardboard based on structural differences. Most commonly used one has, for example, a three-layer structure with a front liner, a flute, and a back liner. And they are differentiated by the height of their flutes and can be used properly depending on the required strength and the application. More specifically, some of them are summarized in Table 1 as shown below.

**[Table 1]**

| Type of Flute | Symbol | Number of Flute 30cm | Height of Flute |
|---|---|---|---|
| A Flute | AF | 34±2 | 4.5 - 4.8 mm |
| B Flute | BF | 50±2 | 2.5 - 2.8 mm |
| C Flute | CF | 40±2 | 3.5 - 3.8 mm |
| E Flute | EF | at least 80 | 1.10 - 1.15 mm |
| F Flute | FF | at least 120 | 0.60 - 0.75 mm |
| GB Flute | GF | at least 180 | 0.50 - 0.55 mm |

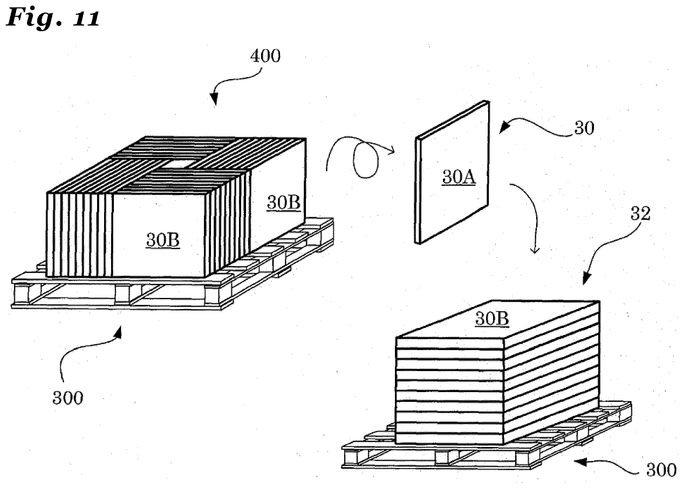

Fig. 4 shows a pallet 10 on which a tile stacked body 32 of stacked tiles is placed with the front face 30A (see Fig. 11) down and the back face 30B up of each tile. Here, no cushioning material or the like is interposed between the tile 30 and the upper surface of the flat plate part 12. And no cushioning material or the like is interposed between the back surface 30B of the lower tile and the front surface 30A (see Figure 11) of the upper tile to be placed onto the lower tile. Hereafter, they are stacked in the same manner. In addition, cushioning material can be interposed between adjacent tiles that are placed flat side by side or between mutually adjacent tiles to prevent respective sides of the tiles from rubbing due to displacement.

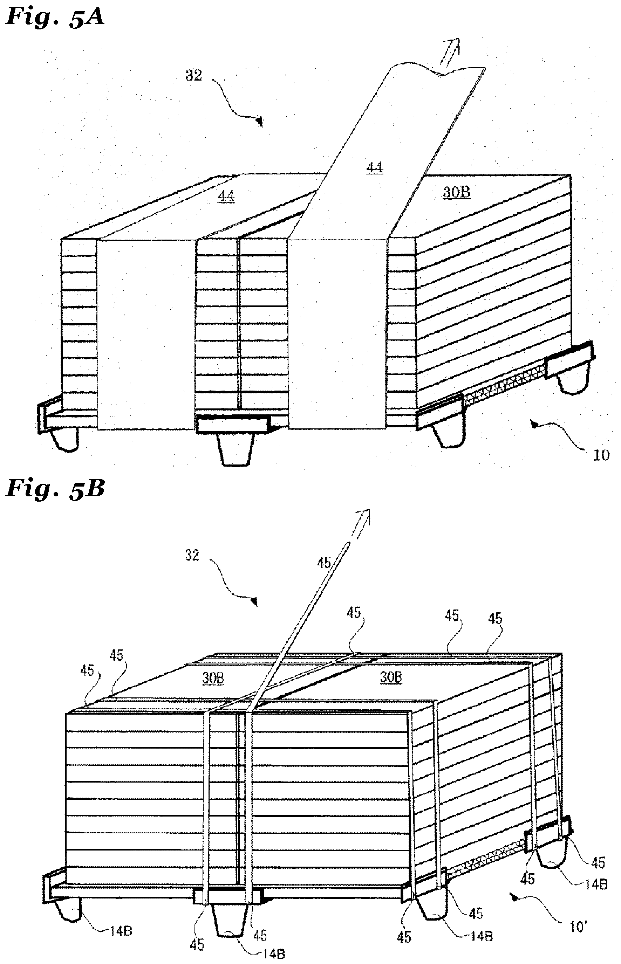

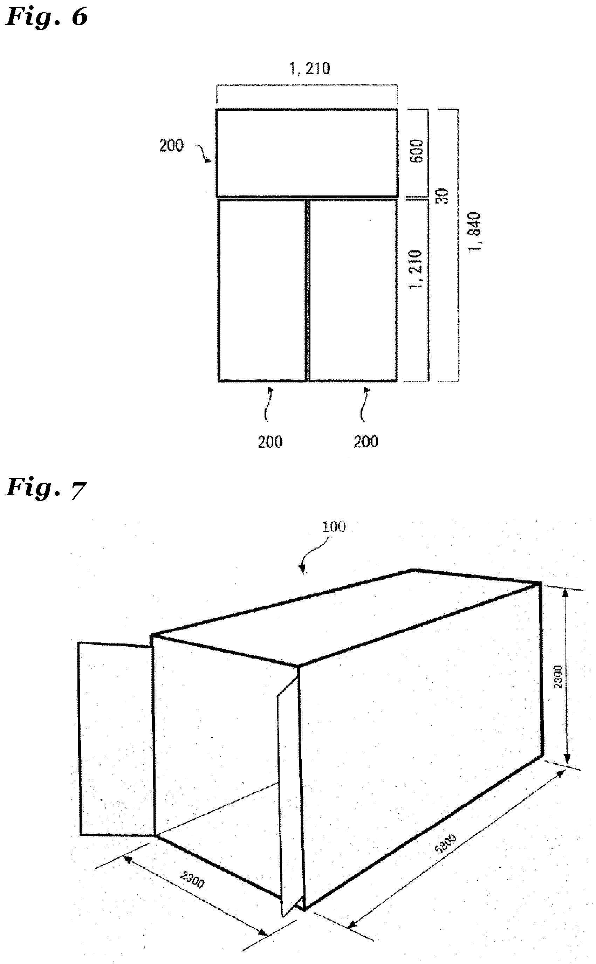

Fig. 5A illustrates how the pallet 10 on which the tile stacked body 32 is placed is secured by the binding band 44. A commonly available lashing belt can be used as such a binding band. As for the binding band, it is preferable that a width of 20 mm or more; 35 mm or more; or 50 mm or more is preferred, and further the width of 200 mm or less; or 100 mm or less is preferred. It is preferable that the thickness is 7 mm or less; or 5 mm or less. Since the tile stacked body 32 and the flat plate part 12 are unified by binding with the binding band it is plausible that high rigidity may be easily achieved against vibration and other external factors. Fig. 6 shows a plan view illustrating that at least three of the pallet with the tile stacked body loaded 200 are collected such that a cluster is formed. In the plan view, the pallet with the tile stacked body loaded 200 has a short side of 600 mm and a long side of 1210 mm. When respective long sides of respective pallets are placed adjacent to each other, a gap of 10 mm between them is provided such that two sets of 1210 mm x 1210 mm are formed, and by placing the pallet with the tile stacked body loaded 200 as a long side thereof is adjacent to short sides of respective pallets with the tile stacked body loaded 200 and providing a gap of 30 mm therebetween, a cluster of 1840 mm x 1210 mm can be formed. This cluster as a unit may be moved into the container, or three of each pallet with the tile stacked body loaded 200 may be brought in, such that the cluster may be formed in the container by tying them together with lashing belts or the like.

Fig. 5B illustrates how the pallet 10' on which the tile stacked body 32 are placed is secured with the lashing belt 45. Since the flat plate part 12 is relatively soft, grooves 15 for fixing lashing belts are provided on the leg parts 14B made of PP material or the like so as to fix the tile stacked body 32.

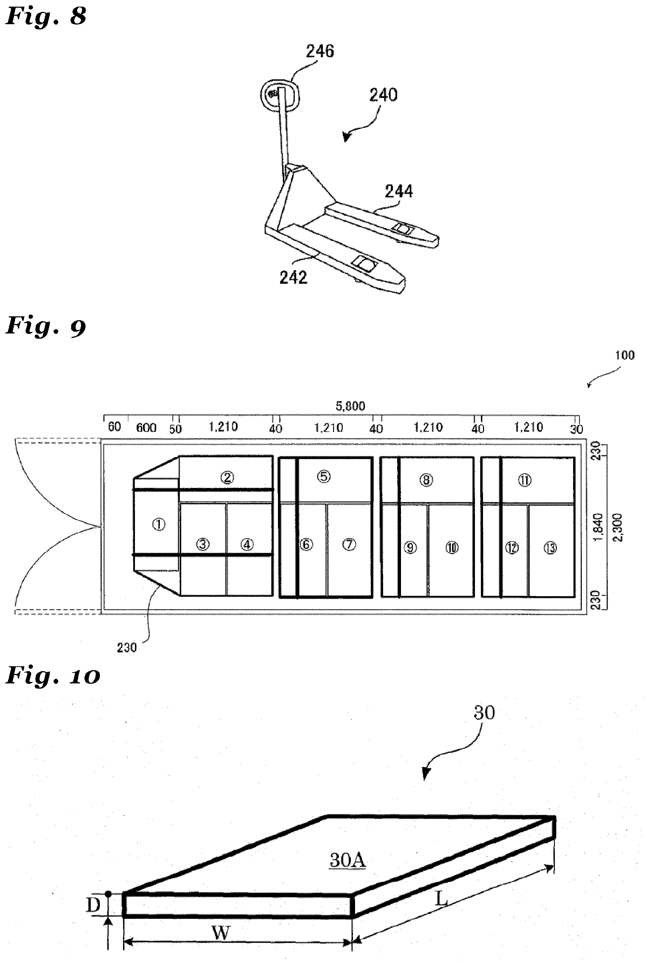

Fig. 7 shows a container 100 generally used for transportation by ship or the like. Fig. 9 illustrates how clusters of pallets with tile stacked bodies loaded as shown in Fig. 6 are arranged in that container. If the arrangement is made in this way, the close-packed efficiency can be achieved, even taking into account the workspace for placement. The pallet with load to be loaded in the container is secured by lashing belts 230. The pallet with load stacked in layer to be loaded in the container 32 is unified by a binding band that may include a lashing belt and secured by a lashing belt 230. Fig. 8 shows an example of a hand lift 240 that can move the pallet with load to be loaded in the container. The hand lift 240 has fork parts 242 and 244 that are separated from each other, and an operation part 246 thereof allows the fork parts 242 and 244 to move up and down and to move laterally. The upper surfaces of the fork parts 242 and 244 are normally positioned at a height of about 100 mm from the floor surface, and hydraulic pressure can raise the height more than 150 mm to lift the pallet and the like.

As shown in Fig. 9, the pallet with load to be loaded in the container is placed inside the container and secured with a lashing belt. In this way, not only the cluster (constituted of three (3) pallets with loads to be loaded in the container), which is the loading unit, but also the entire cluster can be secured by a lashing belt. The inside dimensions of the container 100 are 2300 mm wide, 2300 mm high, and 5800 mm long (20 ft container), according to ISO standards. Within this container, three of the above-mentioned pallets with loads can be placed and secured in the width direction and four of them can be placed and secured in the longitudinal direction. At this time, it is not necessary to fix individual tiles. They are unified as in the pallet with load.

The tile takes the dimensions of width (W) x length (L) x thickness (D), as shown in Fig. 10. In the present embodiment, the tile having the dimensions of W = 600 mm, L = 600 mm, and D = 10 mm is employed. Thus, with respect to the thin tile, the area without support from the lower side sinks more relative to the area with support due to its own weight. In the entire tile, the shape may be like a bowed shape. However, when the tiles are fixed with binding bands without any cushioning materials therebetween, as shown in Fig. 5A, they become a unified body such that the bowed shape can be avoided. This advantage is obtained because the tile manufacturing has become more precise and accurate in recent years, and convex and concave portions or waviness on the surface have been reduced, and, in addition, dimensional tolerances have been able to be smaller, such that so-called deflection and distortion can be sufficiently reduced. And stacking them as they are has come to facilitate integrally unifying the whole. The front face is also sufficiently hard to maintain a glossy surface, etc., even though the front face contacts the back face as the displacement is little.

Conventionally, ceramic tiles 30 are placed, as shown in Fig. 11, in a vertical manner as respective front faces 30A of two tiles are facing with each other while the back faces 30B face outside such that the two tiles are coupled to be one pair so as to configure the tile aggregated body 400, which is placed on the conventional wooden pallet 300. At this time, cushioning materials are placed in appropriate places as needed to prevent damage to the tiles. In this way, an aggregated body 400 of ceramic tiles 30 is formed and placed on the wooden pallet 300, where it is secured. In this way, deflection of the tiles due to vibration is less likely to occur in the plane direction and damage can be avoided. In this state, they can be loaded into the container and transported by sea. However, the tiles cannot be immediately used for the tile laying process even if they are transported to the tile-laying site as is. This is because, for example, in order to apply something equivalent to the primer to the back face 30B of the tile, the tile must be repositioned so that the back face 30B faces up. Therefore, it is necessary to unpackage the tile aggregated body 400, dispose of cushioning materials and the like, and reposition the tiles with respective back sides 30B facing up. Therefore, it does not only cause the productivity to be lowered, but also yield more amount of unnecessary waste.

On the other hand, in the embodiments of the invention of the present application, the amount of waste may be minimized, and the stacked body can be transported as the stacked body is on the pallet, and, furthermore, it is not necessary to reposition the tiles at the tile laying site. In addition, since the flat plate part 12 is made of corrugated cardboard, not only disposing of it after use, but also it can be recycled and reused after the recycling. Because it is made of paper, the environmental burden may be small when it is disposed of or landfilled, and even if it is incinerated, it does not require a special furnace. In addition, since the leg parts are made of PP material (or polypropylene material), the environmental burden of them is not only small, but they also can be reused if they are removed from the glued flat plate part. By using leg parts of the same shape, a plurality of leg parts can be stacked and put together so as to facilitate collecting them such that storage space can be reduced.

Then, at the tile manufacturing site, the tile stacked body as described above can be placed or formed on the pallet of embodiments of this invention of the present application and be secured with a binding band, and it can be used almost as is as a tile stacked body readily-prepared from the manufacturing site, through shipping by sea, in which pallet transport is often used, and further re-loaded on a truck at the port, then, utilized as a readily prepared tile stacked body at the tile laying site. For example, if tiles are stacked with respective back faces 30B facing up as shown in Fig. 4, the tiles can be laid by applying a mortar or a primer on respective back faces 30B, placing the tile immediately on the laying surface (e.g., floor surface or the like), and pressing the tile. In this way, since the tiles can be moved from the tile manufacturing site to the tile laying site through the transportation process without changing the packaging (or stacking configuration), thus not only reducing the labor for transshipment on the way, but also almost eradicating the disposal of unnecessary packaging materials, etc.

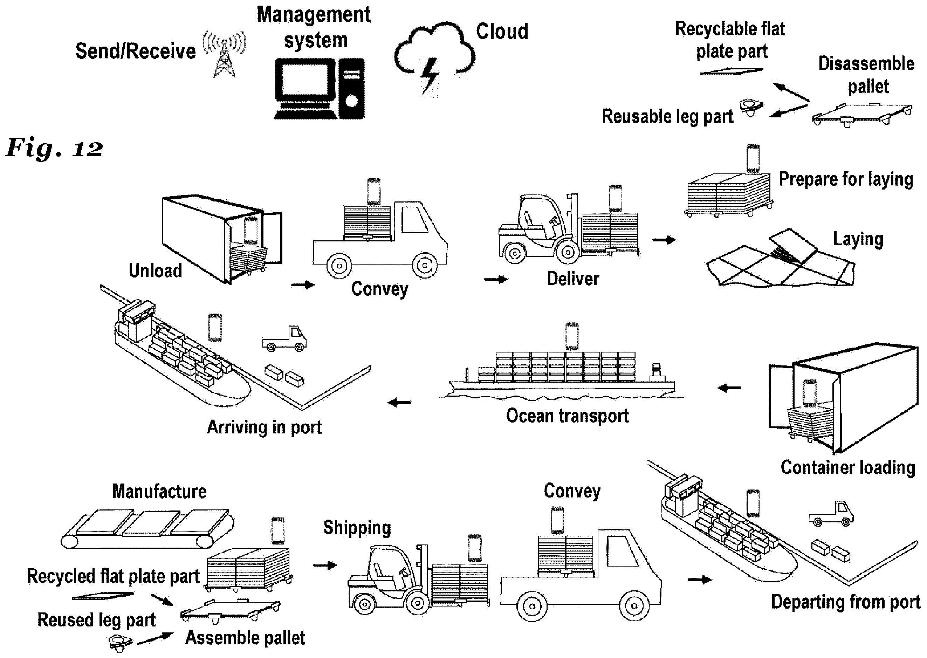

Fig. 12 illustrates a system for managing recyclable pallets from the ceramic tile manufacturing site to the ceramic tile laying site. At the tile manufacturing site, pallets to be used for shipping tiles are assembled. For example, a recycled pallet is assembled from a recycled flat plate part made of recycled material such as corrugated cardboard and leg parts having been disassembled from the original pallet and provided for reuse. The recycled flat plate part may consist of generally recycled corrugated cardboard being available near the manufacturing site. The reused leg parts may include those having been disassembled from a pallet that has been used at least once as the pallet. This reused leg part has a shape and a structure that can be disassembled to improve the volumetric efficiency for easier packing and transportation. Ceramic tiles loaded on such pallets are shipped with the pallets and transported by the truck or other means. If necessary, they are transported to the port to utilize ocean transport and are loaded inside a typical container. This storage method and the like disclosed herein can be used as examples. The ceramic tiles accommodated in the container are transported by sea by the containership and arrive in the port of the destination. At the port, the ceramic tiles are unloaded with the pallets and conveyed by the truck or other means. The ceramic tiles conveyed to the vicinity of the tile laying site are delivered, as they are placed on the pallets, to the laying site by a forklift truck or the like. At the site, the belts and so on holding and securing the ceramic tiles are released (or cut off or else) and used as is for a tile laying process. The, the empty pallets are disassembled into reusable leg parts and recyclable flat plate parts. The recyclable flat plate parts are utilized for general recycling processes such as those with respect to corrugated cardboard. And the reusable leg parts are packaged as appropriate and sent to, for example, the tile manufacturing site. The reusable leg parts are re-used to assemble the recycled pallets at the manufacturing site as described above. In this way, unnecessary packaging materials can be reduced, which can not only reduce the costs, but is also favorable to the environment. A communication terminal is attached to the assembled recycled pallet and the communication terminal (e.g., smartphone, cell phone, etc.) records the attributes (including date of manufacture, place of manufacture, and manufacturer), specifications, and destination and so on with respect to the pallet. From this communication terminal, this information is sent to the computer of a management system through the cloud or other communication means (wired or wireless electromagnetic means of communications (radio waves, telegraph, signals, etc.)). The computer also communicates with the tile laying site and others to match needs. For example, ceramic tiles manufactured on a prospective basis can have a destination or the like, which can be changed during the time from shipment to delivery, as the sites with needs can be identified appropriately. Then, at the laying site, it is easy to grasp when the necessary ceramic tiles will arrive such that the laying work schedule can be adjusted. The system for such adjustments may include software, which may be installed on a computer or other computerized system in the management system. An application for this purpose may also be installed on the communication terminal.

### Explanation of Numerals

| | | | |
|---|---|---|---|
| 10 | pallet | 12 | flat plate part |
| 14 | leg part | 16 | spacer part |
| 18 | horizontal part | 20 | vertical part |
| 22 | support face | 30 | tile |
| 30A | front face | 30B | back face |
| 32 | stacked body | 44 | binding band |
| 100 | container | 300 | pallet |
| 400 | aggregated body | | |

## Claims

1. A pallet comprising:
a flat plate part comprising recyclable material;
a leg part being capable of making a space under the flat plate part and comprising a support face being capable of supporting load;
wherein the flat plate part comprise an upper surface on which two ceramic tiles can be placed flat side by side and supports the two ceramic tiles;
wherein the leg part is disposed at each of at least four (4) portions in a periphery of the flat plate part such that an insertion member to be inserted is not prevented from being inserted into the space such that the pallet or the pallet with a load is lifted or lowered; and
wherein weight of the ceramic tiles which are placed on the upper surface of the flat plate part that is supported on the support face of the leg part is supported by the support face via the flat plate part in at least part of the flat palate part and the support face is sticked to at least part of the flat plate part such that weight of the leg part can be supported when the pallet or the pallet with the load is lifted as the insertion member supports the pallet or the pallet with the load.

2. A leg part that is at least one of leg parts of a pallet as recited in claim 1,
wherein a support face that is sticked to at least part of the flat plate part of the pallet is detachable therefrom and the leg part is separable from the flat plate part by bring detached;
wherein each of leg parts in a separate state has a same structure;
wherein, in at least two leg parts, respective concave and convex portions of external shapes thereof engage with each other such that an aggregated body comprising the at least two leg parts is configured as volumetric efficiency is increased by the engagement.

3. A pallet with a load as recited in claim 1,
wherein a plurality of ceramic tiles are placed on an upper surface of a flat plate part of the pallet as respective front faces of the ceramic tiles are oriented upward such that the ceramic tiles are stacked in layer and wherein a binding band is wrapped around the ceramic tiles being placed and stacked in layer together with the flat palate part.

4. A container in which a plurality of pallets with loads, each of which is defined in claim 3, are loaded.

5. A tile stacked body at a tile-laying site where tiles are to be laid wherein a pallet with a load as recited in claim 4 is placed at the tile-laying site and in a state that a binding band is removed from the pallet with the load that is the tile stacked body.

6. A tile transportation system comprising: a pallet as defined in claim 1; at least one or more ceramic tiles stacked in layer; and a binding band.

7. The tile transportation system according to claim 6, wherein the tile transportation system is used from a manufacturing place or an accumulation place of ceramic tiles, through freight or transportation of the ceramic tiles, to a final construction site.

8. The tile transportation system according to claim 6 or 7, wherein it is not necessary to unpackage at least one or more stacked ceramic tiles from a manufacturing place or an accumulation place of ceramic tiles, through freight or transportation of the ceramic tiles, to a final construction site such as a ceramic tile laying site.

9. A recyclable pallet comprising:
a flat plate part comprising a recyclable material;
at least one leg part as defined in claim 2; and
a leg part having a same structure as the at least one leg part;
wherein the flat plate part comprises an upper surface on which two ceramic tiles to be supported can be placed flat side by side;
wherein the leg part is disposed at each of at least four (4) portions in a periphery of the flat plate part such that an insertion member to be inserted is not prevented from being inserted into a space such that the pallet or the pallet with a load is lifted or lowered;
wherein weight of the ceramic tiles which are placed on the upper surface of the flat plate part that is supported on a support face of the leg part is supported by the support face via the flat plate part in at least part of the flat palate part and the support face is sticked to at least part of the flat plate part such that weight of the leg part can be supported when the pallet or the pallet with the load is lifted as the insertion member supports the pallet or the pallet with the load.

10. A tile transportation system comprising:
a recyclable pallet as recited in claim 9;
at least one or more ceramic tiles to be stacked in layer;
a binding band.

11. A method of shipping ceramic tiles comprising the steps of:
placing a pallet as recited in claim 1 or a recyclable pallet as recited in claim 9;
stacking the ceramic tiles onto the pallet or the recyclable pallet; and
binding the pallet or the recyclable pallet and stacked ceramic tiles with a binding band.

12. A conveyance method comprising the steps of:
placing a pallet as recited in claim 1 or a recyclable pallet as recited in claim 9;
stacking the ceramic tiles onto the pallet or the recyclable pallet;
binding the pallet or the recyclable pallet and stacked ceramic tiles with a binding band so as to configure a pallet with a load; and
loading at least one or more pallets with loads or recyclable pallets with loads into a container.

13. The conveyance method according to claim 12 comprising:
taking out from the container the at least one or more pallets with loads or recyclable pallets with loads having been loaded;
conveying the at least one or more pallets with loads or recyclable pallets with loads to a tile-laying site.

14. The conveyance method according to claim 12 or 13 comprising:
taking out stacked ceramic tiles from the at least one or more pallets with the loads or recyclable pallets with the loads;
removing leg parts from the pallets or recyclable pallets; and
attaching the removed leg parts to a flat plate part comprising a recyclable material so as to assemble a recyclable pallet.

15. A system which manages recyclable pallets including a pallet as defined in claim 1 or 9 from a manufacturing place of ceramic tiles to a laying site where the ceramic tiles are laid, comprising:
a computer;
a transmission part that transmits information from and to the computer;
a communication terminal accompanied by the recyclable pallets that communicates with the computer;
wherein the recyclable pallets are assembled from recycled flat plate parts and reused leg parts at a manufacturing site where the ceramic tiles are manufactured;
wherein the recyclable pallets are disassembled to recyclable flat plate parts and reusable leg parts at the tile-laying site;
wherein the recyclable pallets are used at least one stage from shipping the ceramic tiles; conveying the ceramic tiles; leaving a port with the ceramic tiles; transporting the ceramic tiles; arriving in a port with the ceramic tiles; delivering the ceramic tiles; and preparing laying the ceramic tiles.
